# EUROPÄISCHE PATENTSCHRIFT

(11) **EP 1 996 444 B1**
(45) Veröffentlichungstag und Bekanntmachung des Hinweises auf die Patenterteilung: **29.07.2009**
(21) Anmeldenummer: 07723440.9
(22) Anmeldetag: 20.03.2007
(51) Int. Cl.: B62D 11/18

(54) **VORRICHTUNG ZUM UMSCHALTEN DES LENKGETRIEBES EINES KETTENFAHRZEUGES**
DEVICE FOR SWITCHING THE STEERING GEAR OF A TRACKED VEHICLE
DISPOSITIF POUR COMMUTER LE MECANISME DE DIRECTION D'UN VEHICULE A CHENILLES

(30) Priorität: 21.03.2006 DE 102006013262
(43) Veröffentlichungstag der Anmeldung: 03.12.2008
(73) Patentinhaber: Rheinmetall Landsysteme GmbH, 24107 Kiel (DE)
(72) Erfinder: LUMKOWSKY, Frank, 24229 Dänischenhagen (DE)
(74) Vertreter: Dietrich, Barbara
(86) Internationale Anmeldenummer: PCT/EP2007/002479
(87) Internationale Veröffentlichungsnummer: WO 2007/107343

(56) Entgegenhaltungen:
- DE-A1- 3 819 446

## Beschreibung

Die Erfindung betrifft eine Vorrichtung zum Umschalten des Lenkgetriebes eines Kettenfahrzeuges, bei dem die Übertragungsrichtung der Lenkbewegung einer Lenksäule auf ein Lenkgestänge bei einem Fahrtrichtungswechsel umkehrbar ist.

Das Lenken von Gleiskettenfahrzeugen erfolgt in der Regel durch ein hydrodynamisches Lenkgetriebe, das als Teil des Fahrzeugantriebes ausgebildet ist. Durch dieses Lenkgetriebe werden die Antriebsräder der Gleisketten jeder Fahrzeugseite entsprechend der auszuführenden Kurvenbewegung des Fahrzeuges bei Vorwärts- und Rückwärtsfahrt angetrieben. Das Lenkgetriebe wird vom Lenkrad aus über eine Lenksäule und ein Betätigungsgestänge, das auf Steuerventile des Getriebes einwirkt, betätigt. Hierdurch wird es entsprechend der zu fahrenden Kurve beeinflusst, indem die Ketten mit unterschiedlicher Geschwindigkeit über die Kettenräder angetrieben werden. Durch die Ausbildung des Lenkgetriebes ist es zum Fahren einer Kurve, z.B. einer Rechtskurve, bei Vorwärts- und Rückwärtsfahrt erforderlich, dass das Lenkrad bei Rückwärtsfahrt entgegen der Lenkbewegung bei Vorwärtsfahrt gedreht wird. Diese ungleichsinnige Lenkbewegung kann leicht zu einer Fehlbedienung und damit zu Unfällen führen, weil die Fahrzeuglenkung von Radfahrzeugen und der meisten mechanisch gelenkten Kettenfahrzeugen für Vorwärts- und Rückwärtsfahrt gleichsinnig sind.

Um für die Vorwärts- und Rückwärtsfahrt auch bei Kettenfahrzeugen mit hydrodynamischen Lenkgetriebe eine gleichsinnige Lenkbewegung durchführen zu können, sind aus der DE-29 48 214 A1, der DE 42 10 728 A1 und der DE 196 14 723 A1 Fahr- und Lenkbetätigungseinrichtungen für Gleiskettenfahrzeuge bekannt, bei denen jeweils eine Vorrichtung zum Umschalten des Lenkgetriebes vorgesehen ist, mittels welcher die Übertragungsrichtung der Lenkbewegung der Lenksäule auf ein Lenkgestänge bei einem Fahrtrichtungswechsel umkehrbar ist. Hierzu ist jeweils ein Umlenkelement drehbar mit der Lenksäule verbunden, welches um eine Schwenkachse in einem Lagerbock der Lenksäule in eine Lage oberhalb oder unterhalb der Lenksäulendrehachse verschwenkbar ist, wobei das Umlenkelement mit einem auf Stellventile des Fahrzeuggetriebes einwirkendes Steuergestänge verbunden ist. Das Umlenkelement wird dabei entweder von einem Hydraulikzylinder (DE-29 48 214 A1 und DE 196 14 723 A1) oder einem Elektromotor (DE 42 10 728 A1) angesteuert. Dabei arbeitet bei der hydraulischen Lösung ein Zylinder gegen eine Zugfeder oder gegen eine oder mehrere Gasdruckfedern.

Weiterhin ist aus dem Dokument DE 38 19 446 A1 eine Vorrichtung zum Umschalten des Lenkgetriebes eines Kettenfahrzeuges, bei dem die Übertragungsrichtung der Lenkbewegung einer Lenksäule auf ein Lenkgestänge bei einem Fahrtrichtungswechsel umkehrbar ist, mit den Merkmalen, dass die Vorrichtung zwei Zahnräder umfasst und die beiden Zahnräder in je eine Zahnstange eingreifen, die in Bezug auf die Drehachse der Lenksäule auf gegenüberliegenden Seiten angeordnet und an einem radial zur Lenksäule verschiebbaren und mit dem Lenkgestänge verbindbaren Trägerteil befestigt sind, bekannt.

Nachteilig ist bei den bekannten Vorrichtungen unter anderem, dass sie relativ platzaufwendig sind und, bedingt durch den möglichen Druckverlust der Gasfedern, dem möglichen Bruch der Zugfedern sowie der Forderung nach Redundanz bei elektrisch angesteuerter Mechanik, den heute geforderten Sicherheitsstandards nicht genügen.

Der Erfindung liegt daher die Aufgabe zugrunde, eine Vorrichtung der eingangs erwähnten Art anzugeben, die möglichst wenig sicherheitskritische Bauelemente enthält, platzsparend aufgebaut ist und mit der in Betrieb befindliche Fahrzeuge nachrüstbar sind.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die erfindungsgemäße Lenksinn-Umschaltvorrichtung umfasst zwei axial hintereinander und hinsichtlich ihrer axialen Lage fest an der Lenksäule angeordnete Zahnräder, welche jeweils mittels einer schaltbaren Kupplung mit der Lenksäule drehfest verbindbar oder gegenüber der Lenksäule entkuppelbar sind, wobei die beiden Zahnräder in je eine Zahnstange eingreifen, die in Bezug auf die Drehachse der Lenksäule auf einander gegenüberliegenden Seiten angeordnet und an einer radial zur Lenksäule verschiebbaren und mit dem Lenkgestänge verbindbaren Trägerteil befestigt sind.

Mit dieser Vorrichtung ist es auf einfache Weise möglich, neben den Schaltstellungen "Vorwärts" und "Rückwärts", bei denen jeweils eine schaltbare Zahnrad-Zahnstangen-Anordnung zum Einsatz kommt, auch eine Schaltstellung "Neutral" zu realisieren, bei welcher beide Zahnräder mit der Lenksäule drehfest verbunden sind, so dass die gesamte Vorrichtung blockiert ist.

Vorteilhafterweise werden für die Fixierung der Betätigungselemente keine Federelemente benötigt. Außerdem können die Komponenten, die für die Umschaltung benötigt werden, von der Lenkbewegung vollständig entkoppelt werden, d.h., dass keine Komponen-ten an der Lenkwelle adaptiert sind, welche bei einem Lenkausschlag mitbewegt werden müssen.

Bei einer vorteilhaften Ausführungsform der Erfindung ist vorgesehen, dass jede der beiden schaltbaren Kupplungen eine drehfest mit der Lenksäule verbundene, gegenüber dieser axial entlang eines Keilwellenprofils der Lenksäule verschiebbare Keilnabe umfasst, welche mittels eines Antriebes von einer ersten Position, bei welcher das Zahnrad und die Keilnabe über eine Formschlussverbindung miteinander verbunden sind, in eine zweite Position verschiebbar ist, bei welcher der Formschluss zwischen der Keilnabe und dem Zahnrad aufgehoben ist.

Dabei hat es sich als vorteilhaft erwiesen, wenn zur formschlüssigen Verbindung zwischen der jeweiligen Keilnabe und dem entsprechenden Zahnrad das Zahnrad auf seiner der Keilnabe zugewandten Seite mindestens einen Vorsprung aufweist, welcher in der ersten Position der Keilnabe formschlüssig in eine Ausnehmung der Keilnabe eingreift.

Der Antrieb zur axialen Verschiebung der jeweiligen Keilnabe kann beispielsweise aus einer Schaltklaue bestehen, die mittels einer Schubstange axial verschiebbar ist, wobei die Schaltklaue die Keilnabe randseitig umfasst.

Zur Vermeidung einer axialen Verschiebung der Zahnräder hat es sich als zweckmäßig erwiesen, wenn an dem Trägerteil zwei Führungsleisten befestigt sind, welche jeweils in eine nutenförmige Ausnehmung von mit den Zahnrädern verbundenen Flanschen eingreifen.

Weitere Einzelheiten und Vorteile der Erfindung ergeben sich aus dem folgenden anhand von Figuren erläuterten Ausführungsbeispiel. Es zeigen:
- Fig.1: eine schematische perspektivische Ansicht einer erfindungsgemäßen Vorrichtung, von der Vorderseite aus gesehen, wobei die Vorrichtung sich in der Schaltstellung "Neutral" befindet;
- Fig.2: eine perspektivische Ansicht der in Fig.1 dargestellten Vorrichtung, schräg von der Rückseite aus gesehen;
- Fig.3: einen Längsschnitt der in den Fig.1 und 2 dargestellten Vorrichtung;
- Fig.4: eine schematische perspektivische Ansicht der in Fig.1 dargestellten Vorrichtung, von der Vorderseite aus gesehen, wobei die Vorrichtung sich in der Schaltstellung "Vorwärts" befindet und die mit der Vorrichtung verbundene Lenksäule um einen Lenkwinkel nach links um 90° verdreht wurde;
- Fig.5: eine perspektivische Ansicht der in Fig.4 dargestellten Vorrichtung, schräg von der Rückseite aus gesehen;
- Fig.6: einen Längsschnitt der in den Fig.4 und 5 dargestellten Vorrichtung;
- Fig.7: einen Längsschnitt der in Fig.1 dargestellten Vorrichtung, wobei die Vorrichtung sich in der Schaltstellung "Rückwärts" befindet.

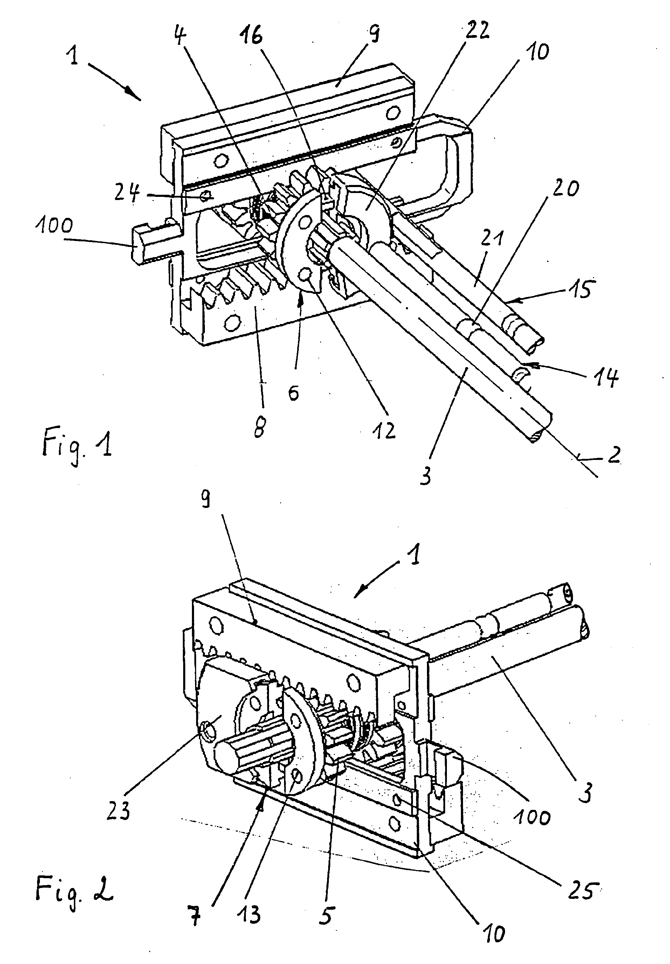

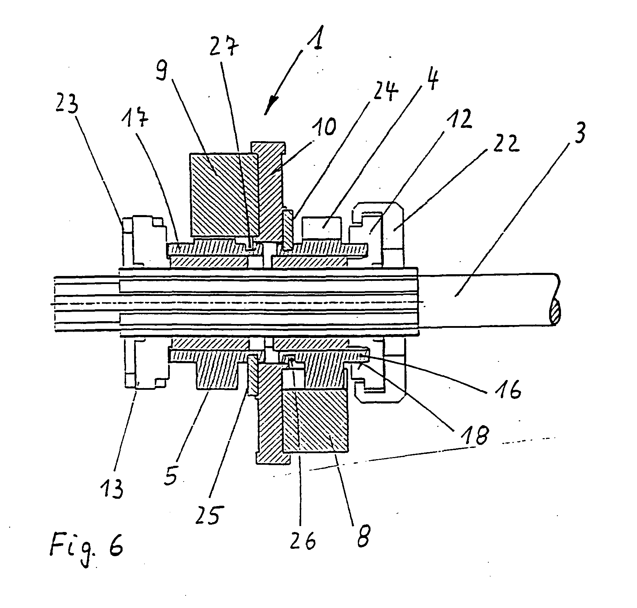

In den Fig.1-7 ist mit 1 eine an der Lenksäule 3 eines Gleiskettenfahrzeuges angeordnete erfindungsgemäße Vorrichtung zum Umschalten des nicht dargestellten Lenkgetriebes dieses Fahrzeuges bezeichnet.

Die Vorrichtung 1 umfasst zwei, in Richtung der Drehachse 2 der Lenksäule 3 gesehen, hintereinander und hinsichtlich ihrer axialen Lage fest an der Lenksäule 3 angeordnete Zahnräder 4, 5. Die beiden Zahnräder 4, 5 sind jeweils mittels einer schaltbaren Kupplung 6, 7 mit der Lenksäule 3 drehfest verbindbar (kuppelbar) oder gegenüber der Lenksäule 3 entkuppelbar.

Die beiden Zahnräder 4, 5 greifen in je eine Zahnstange 8, 9 ein, die in Bezug auf die Drehachse 2 der Lenksäule 3 auf einander gegenüberliegenden Seiten (d.h. in den Figuren ober- und unterhalb der Drehachse) an einem radial zur Lenksäule 3 verschiebbaren flachen Trägerteil 10 befestigt sind. An diesem Trägerteil 10 wird an einer nur schematisch angedeuteten Befestigungseinrichtung 100 auch das nicht dargestellte Lenkgestänge befestigt, welches die erfindungsgemäße Umschaltvorrichtung 1 mit dem Lenkgetriebe des Kettenfahrzeuges verbindet.

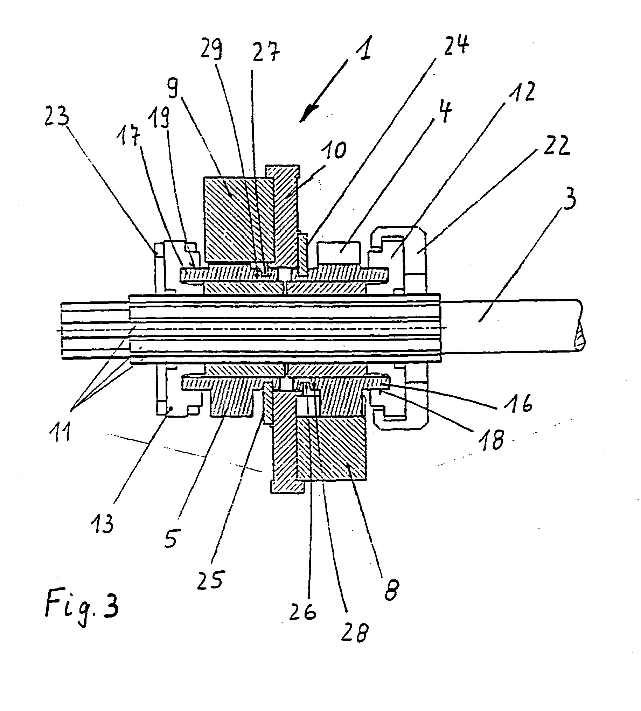

Die beiden schaltbaren Kupplungen 6, 7 umfassen jeweils eine drehfest mit der Lenksäule 3 verbundene und gegenüber dieser axial entlang eines Keilwellenprofils 11 (Fig.3) der Lenksäule 3 verschiebbare Keilnabe 12, 13. Diese Keilnaben 12, 13 sind jeweils mittels eines Antriebes 14, 15 von einer ersten Position, bei welcher das entsprechende Zahnrad 4, 5 und die zugehörige Keilnabe 12, 13 über eine Formschlussverbindung miteinander verbunden sind, in eine zweite Position verschiebbar, bei welcher der Formschluss zwischen der Keilnabe 12, 13 und dem zugehörigen Zahnrad 4, 5 aufgehoben ist.

Zur formschlüssigen Verbindung zwischen den Keilnaben 12, 13 und den zugehörigen Zahnrädern 4, 5 dienen bei dem in den Fig.1-7 dargestellten Ausführungsbeispiel zwei umfangsseitig gegenüberliegende Vorsprünge (Knaggen) 16, 17, welche in der jeweils ersten Position der Keilnaben 12, 13 in eine komplementäre Ausnehmung 18, 19 der Keilnaben 12, 13 formschlüssig eingreifen.

Als Antriebe 14, 15 werden bei dem in den Figuren dargestellten Ausführungsbeispiel axial mittels Schubstangen 20, 21 verschiebbare Schaltklauen 22, 23 verwendet, welche die Keilnaben 12, 13 jeweils randseitig umfassen.

Zur Vermeidung der axialen Verschiebung der beiden Zahnräder 4, 5 sind an dem Trägerteil 10 zwei Führungsleisten 24, 25 befestigt, die in entsprechende nutenförmige Ausnehmungen 26, 27 der mit den Zahnrädern 4, 5 verbundenen Flansche 28, 29 eingreifen.

Nachfolgend wird auf die einzelnen Schaltstellungen der erfindungsgemäßen Vorrichtung 1 eingegangen.

In der in den Fig.1-3 dargestellten Schaltstellung "Neutral" greifen die Knaggen 16, 17 beider Zahnräder 4, 5 in die Ausnehmungen 18, 19 der beiden Keilnaben 12, 13 ein, so dass ein Kraftschluss betreffend des eingeleiteten Drehmomentes über die Lenksäule 3 hergestellt ist. Durch den Eingriff beider mit der Lenksäule 3 drehfest verbundener Zahnräder 4, 5 in die ihnen zugeordneten Zahnstangen 8, 9 ist demnach bei dem Versuch einer Drehung der Lenksäule 3 eine lineare Bewegung des Trägerteiles 10 aufgrund der entgegengesetzt gerichteten Kräfte nicht möglich. Das System ist blockiert.

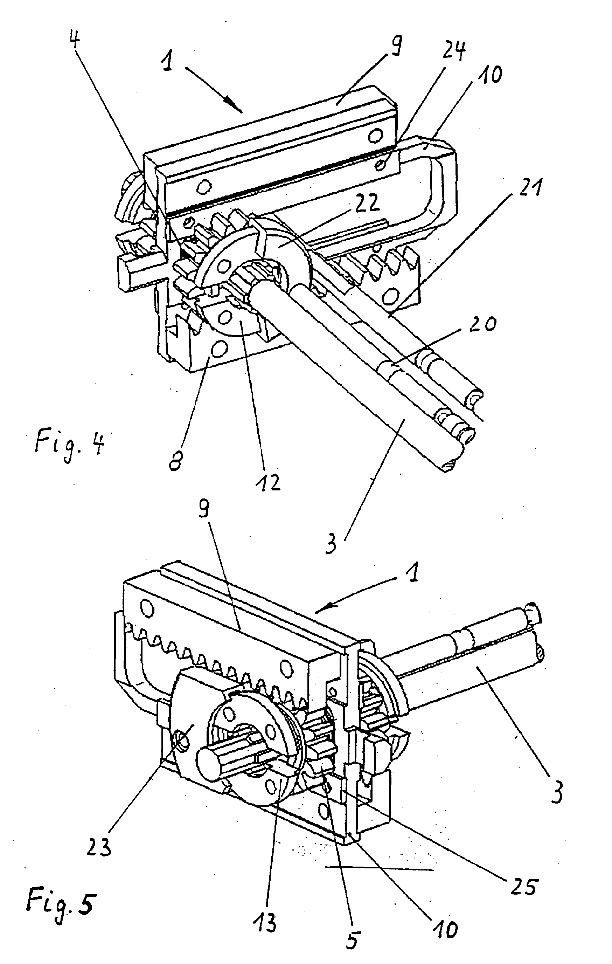

Soll nun der Lenksinn für Vorwärtsfahrt eingestellt werden (Fig.4-6), wird die Schubstange 21 des Antriebes 15 mit der adaptierten Schaltklaue 23 nach vorne in die Schaltstellung "Vorwärts" verschoben, und die axial verschiebbare Keilnabe gibt das Zahnrad 5 frei, indem der Eingriff der Knaggen 17 in die Ausnehmung 19 der Keilnabe 13 aufgehoben wird.

Das Zahnrad 5 besitzt nun keinen Formschluss mehr mit der Keilnabe 13.

Wird nun eine Lenkbewegung mit dem nicht dargestellten Lenkrad z.B. um einen Lenkwinkel von 90° nach links getätigt, so verschiebt sich aufgrund der Drehung der Lenksäule 3 das Trägerteil 10 mit den Zahnstangen 8, 9 linear nach rechts (Fig.4 und 5) entsprechend der im Eingriff befindlichen Keilnaben-Zahnrad-Kombination 12-4. Das freigeschaltete Zahnrad 5, welches sich im stetigen Eingriff mit der Zahnstange 9 befindet, dreht sich frei um die Keilnabe 13 im entgegengesetzten Drehsinn wie das eingerückte Zahnrad 4.

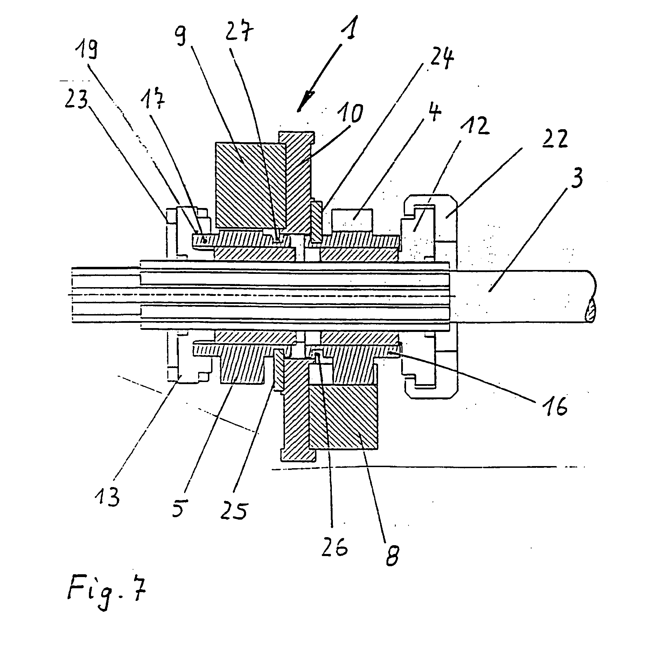

Für die Einschaltung des Lenksinnes für Rückwärtsfahrt wird die Schubstange 21 wieder zurückgezogen, um den Formschluss zwischen Zahnrad 5 und Keilnabe 13 wieder herzustellen. Das System befindet sich daher zunächst wieder in der Schaltstellung "Neutral". Durch Zurückziehen der Schubstange 20 in die Schaltstellung "Rückwärts" zieht die Schaltklaue 22 die Keilnabe 12 nach vorne und das Zahnrad 4 wird freigeschaltet (Fig.7).

Wird nun wiederum eine Lenkbewegung mit dem nicht dargestellten Lenkrad um einen Lenkwinkel von 90° nach links getätigt, so verschiebt sich aufgrund der Drehung der Lenksäule 3 das Trägerteil 10 mit den Zahnstangen 8, 9 linear nach links entsprechend der im Eingriff befindlichen Keilnaben-Zahnrad-Kombination 13-5. Das freigeschaltete Zahnrad 4, welches sich im stetigen Eingriff mit der Zahnstange 9 befindet, dreht sich nun frei um die Keilnabe 12 im entgegengesetzten Drehsinn wie das eingerückte Zahnrad 5.

Die Erfindung ist selbstverständlich nicht auf das vorstehend beschriebene Ausführungsbeispiel beschränkt. So können beispielsweise die schaltbaren Kupplungen auch einen anderen Aufbau besitzen, sofern sie Formschluss garantieren und eine Straßenzulassung für ein Fahrzeug nur dann erteilt wird, wenn die Lenkung ein 100% -Formschluss der einzelnen an der Lenkbewegung beteiligten Bauteile garantiert. Ansonsten wären auch schaltbare Reibschlusskupplungen (z.B. Magnetkupplungen) möglich.

Die manuelle Ansteuerung der Schubstangen 20, 21 über eine Schaltwelle ist alternativ auch mit nicht näher dargestellten Aktuatoren (z. B. Pneumatikzylinder, E-Motor etc.) möglich, benötigt aber entsprechende Ventile, Elektronik und Software sowie entsprechende Positionsabfragen.

### Bezugszeichenliste

- 1: Vorrichtung, Umschaltvorrichtung
- 2: Drehachse
- 3: Lenksäule
- 4,5: Zahnräder
- 6,7: Kupplungen
- 8,9: Zahnstangen
- 10: Trägerteil
- 11: Keilwellenprofil
- 12,13: Keilnaben
- 14,15: Antriebe
- 16,17: Knaggen, Vorsprünge
- 18,19: Ausnehmungen
- 20,21: Schubstangen
- 22,23: Schaltklauen
- 24,25: Führungsleisten
- 26,27: nutenförmige Ausnehmungen
- 28,29: Flansche

- 100: Befestigungseinrichtung

## Patentansprüche

1. Vorrichtung zum Umschalten des Lenkgetriebes eines Kettenfahrzeuges, bei dem die Übertragungsrichtung der Lenkbewegung einer Lenksäule (3) auf ein Lenkgestänge bei einem Fahrtrichtungswechsel umkehrbar ist, mit den Merkmalen:
a) die Vorrichtung (1) umfasst zwei axial hintereinander und hinsichtlich ihrer axialen Lage fest an der Lenksäule (3) angeordnete Zahnräder (4, 5), welche jeweils mittels einer schaltbaren Kupplung (6, 7) mit der Lenksäule (3) drehfest verbindbar (kuppelbar) oder gegenüber der Lenksäule (3) entkuppelbar sind;
b) die beiden Zahnräder (4, 5) greifen in je eine Zahnstange (8, 9) ein, die in Bezug auf die Drehachse (2) der Lenksäule (3) auf einander gegenüberliegenden Seiten angeordnet und an einem radial zur Lenksäule (3) verschiebbaren und mit dem Lenkgestänge verbindbaren Trägerteil (10) befestigt sind.

2. Vorrichtung nach Anspruch 1, **dadurch gekennzeichnet, dass** jede der beiden schaltbaren Kupplungen (6, 7) eine drehfest mit der Lenksäule (3) verbundene, gegenüber dieser axial entlang eines Keilwellenprofils (11) der Lenksäule (3) verschiebbare Keilnabe (12, 13) umfasst, welche mittels eines Antriebes (14, 15) von einer ersten Position, bei welcher das Zahnrad (4, 5) und die Keilnabe (12, 13) über eine Formschlussverbindung miteinander verbunden sind, in eine zweite Position verschiebbar ist, bei welcher der Formschluss zwischen der Keilnabe (12, 13) und dem Zahnrad (4, 5) aufgehoben ist.

3. Vorrichtung nach Anspruch 2, **dadurch gekennzeichnet, dass** zur formschlüssigen Verbindung zwischen Keilnabe (12, 13) und Zahnrad (4, 5) das Zahnrad (4, 5) auf seiner der Keilnabe (12, 13) zugewandten Seite mindestens einen Vorsprung (16, 17) aufweist, welcher in der ersten Position der Keilnabe (12, 13) formschlüssig in eine Ausnehmung (18, 19) der Keilnabe (12, 13) eingreift.

4. Vorrichtung nach Anspruch 2 oder 3, **dadurch gekennzeichnet, dass** der Antrieb (14, 15) zur axialen Verschiebung der Keilnabe (12, 13) eine mittels einer Schubstange (20, 21) axial verschiebbare Schaltklaue (22, 23) umfasst, die randseitig die Keilnabe (12, 13) umgreift.

5. Vorrichtung nach einem der Ansprüche 1 bis 4, **dadurch gekennzeichnet, dass** zur Vermeidung einer axialen Verschiebung der Zahnräder (4, 5) an dem Trägerteil (10) zwei Führungsleisten (24, 25) befestigt sind, welche jeweils in eine nutenförmige Ausnehmung (26, 27) mit den Zahnrädern (4, 5) verbundener Flansche (28, 29) eingreifen.

## Claims

1. Apparatus for switching over the steering gear of a tracked vehicle, in which the transmission direction of the steering movement of a steering column (3) to a steering linkage can be reversed if the driving direction changes, having the following features:
a) the apparatus (1) comprises two gearwheels (4, 5) which are arranged on the steering column (3) axially behind one another and in a fixed manner with regard to their axial position, which gearwheels (4, 5) can be connected (can be coupled) in a rotationally fixed manner to the steering column (3) in each case by means of a switchable clutch (6, 7), or can be decoupled from the steering column (3);
b) the two gearwheels (4, 5) engage into in each case one rack (8, 9), which are arranged on opposite sides in relation to the rotational axis (2) of the steering column (3) and are fastened to a carrier part (10) which can be displaced radially with respect to the steering column (3) and can be connected to the steering linkage.

2. Apparatus according to Claim 1, **characterized in that** each of the two switchable clutches (6, 7) comprises a splined hub (12, 13) which is connected in a rotationally fixed manner to the steering column (3), can be displaced with respect to the latter axially along a splined shaft profile (11) of the steering column (3), and can be displaced by means of a drive (14, 15) from a first position, in which the gearwheel (4, 5) and the splined hub (12, 13) are connected to one another via a positively locking connection, into a second position, in which the positive connection between the splined hub (12, 13) and the gearwheel (4, 5) is cancelled.

3. Apparatus according to Claim 2, **characterized in that**, in order to connect the splined hub (12, 13) and the gearwheel (4, 5) positively, the gearwheel (4, 5) has at least one projection (16, 17) on its side which faces the splined hub (12, 13), which projection (16, 17) engages positively into a recess (18, 19) of the splined hub (12, 13) in the first position of the splined hub (12, 13).

4. Apparatus according to Claim 2 or 3, **characterized in that**, for the axial displacement of the splined hub (12, 13), the drive (14, 15) comprises a shifting claw (22, 23) which can be displaced axially by means of a push rod (20, 21) and engages around the edge of the splined hub (12, 13).

5. Apparatus according to one of Claims 1 to 4, **characterized in that**, in order to avoid an axial displacement of the gearwheels (4, 5), two guide bars (24, 25) are fastened to the carrier part (10), which guide bars (24, 25) engage in each case into a groove-shaped recess (26, 27) of flanges (28, 29) which are connected to the gearwheels (4, 5).

## Revendications

1. Dispositif pour commuter le mécanisme de direction d'un véhicule à chenilles, dans lequel le sens de transfert du mouvement de direction d'une colonne de direction (3) à une tringlerie de direction peut être inversé en cas de changement de direction de conduite, ayant les caractéristiques suivantes :
a) le dispositif (1) comprend deux roues dentées (4, 5) disposées axialement l'une derrière l'autre et fixement sur la colonne de direction (3), par rapport à leur position axiale, lesquelles peuvent être connectées (accouplées) à chaque fois de manière solidaire en rotation au moyen d'un accouplement commutable (6, 7) à la colonne de direction (3) ou désaccouplées de la colonne de direction (3) ;
b) les deux roues dentées (4, 5) viennent en prise dans une crémaillère respective (8, 9), lesquelles crémaillères sont disposées, par rapport à l'axe de rotation (2) de la colonne de direction (3), sur des côtés opposés et sont fixées sur une partie de support (10) déplaçable radialement par rapport à la colonne de direction (3) et pouvant être connectée à la tringlerie de direction.

2. Dispositif selon la revendication 1, **caractérisé en ce que** chacun des deux accouplements commutables (6, 7) comprend un moyeu cannelé (12, 13) connecté de manière solidaire en rotation à la colonne de direction (3), déplaçable par rapport à celle-ci le long d'un profil d'arbre cannelé (11) de la colonne de direction (3), qui peut être déplacé au moyen d'un entraînement (14, 15) d'une première position dans laquelle la roue dentée (4, 5) et le moyeu cannelé (12, 13) sont connectés l'un à l'autre par le biais d'une connexion par engagement positif, à une deuxième position dans laquelle l'engagement positif entre le moyeu cannelé (12, 13) et la roue dentée (4, 5) est rompu.

3. Dispositif selon la revendication 2, **caractérisé en ce que** pour la connexion par engagement positif entre le moyeu cannelé (12, 13) et la roue dentée (4, 5), la roue dentée (4, 5) présente, sur son côté tourné vers le moyeu cannelé (12, 13), au moins une saillie (16, 17) qui vient en prise dans la première position du moyeu cannelé (12, 13) par engagement positif dans un évidement (18, 19) du moyeu cannelé (12, 13).

4. Dispositif selon la revendication 2 ou 3, **caractérisé en ce que** l'entraînement (14, 15) pour le déplacement axial du moyeu cannelé (12, 13) comprend une griffe de commutation (22, 23) déplaçable axialement au moyen d'une barre de poussée (20, 21) et qui vient en prise autour du moyeu cannelé (12, 13) par ses bords.

5. Dispositif selon l'une quelconque des revendications 1 à 4, **caractérisé en ce que** pour éviter un déplacement axial des roues dentées (4, 5) sur la partie de support (10), deux barrettes de guidage (24, 25) sont fixées et viennent en prise à chaque fois dans un évidement (26, 27) en forme de rainure avec des brides (28, 29) connectées aux roues dentées (4, 5).
